Europäisches Patentamt

European Patent Office

Office européen des brevets

(19)

(11) Veröffentlichungsnummer: **0 329 812 B1**

(12) **EUROPÄISCHE PATENTSCHRIFT**

(45) Veröffentlichungstag der Patentschrift: **06.05.92**

(51) Int. Cl.⁵: **H04N 9/83**

(21) Anmeldenummer: **88102865.8**

(22) Anmeldetag: **26.02.88**

(54) **Digitalschaltung eines Videobandrecorders.**

(43) Veröffentlichungstag der Anmeldung:
**30.08.89 Patentblatt 89/35**

(45) Bekanntmachung des Hinweises auf die
Patenterteilung:
**06.05.92 Patentblatt 92/19**

(84) Benannte Vertragsstaaten:
**DE FR NL**

(56) Entgegenhaltungen:

**IEEE TRANSACTIONS ON CONSUMER ELEC-
TRONICS, Band CE-32, Nr. 3, August 1986,
Seiten 372-378, New York, US; S. KATO et al.:
"Digital video signal processing in Home
VTR's"**

**12. JAHRESTAGUNG DER FERNSEH- UND KI-
NOTECHNISCHEN GESELL-
SCHAFT,TAGUNGSBAND 2, 2-6. Juni 1986,
Seiten 718-731, Mainz; S. MEHRGARDT
"Digitaler Signalprozessor für Videorecorder"**

(73) Patentinhaber: **Deutsche ITT Industries GmbH
Hans-Bunte-Strasse 19 Postfach 840
W-7800 Freiburg i.Br.(DE)**

(72) Erfinder: **Désor, Hans-Jürgen, Dipl.-Ing.
Zähringerstrasse 50
W-7800 Freiburg i. Br.(DE)**
Erfinder: **Winterer, Martin, Dipl.-Phys.
Hofackerstrasse 91a
W-7800 Freiburg i. Br.(DE)**

**Beschreibung**

Die Erfindung betrifft eine für Recording und Playback gemeinsame Digitalschaltung eines Videobandrecorders entsprechend dem Oberbegriff des Patentanspruchs 1. Eine derartige Digitalschaltung ist in dem von G. Drechsler zusammengestellten "Tagungsband, Teil 2, 12. Jahrestagung der FKTG", Mainz, 02. bis 06. Juni 1986, Seiten 718 bis 731 beschrieben. Insbesondere auf den Seiten 728 bis 730 ist die digitale Verarbeitung des Chromasignals anhand von Bild 8 auf Seite 729 erläutert. Die Erfindung bezieht sich auf diejenige der beiden auf Seite 728 geschilderten Varianten, bei der das Eingangssignal durch Mischung in das Basisband synchron demoduliert wird, wobei das Mischsignal durch eine Phasenregelschleife mit dem Farbhilfsträger verkoppelt ist.

Der Erfindung liegt, ausgehend von dem genannten Stand der Technik, die Aufgabe zugrunde, bei dieser Chroma-Demodulationsart erforderliche Teilschaltungen für die (automatische) Farbregelung (Automatic Chroma Control = ACC) sowie für die (automatische) Phasenregelung der die Mischsignale erzeugenden Oszillatoren und für deren (automatische) Frequenzregelung anzugeben, wobei auf geringen Schaltungsaufwand, insbesondere für die ACC, zu achten und die Regelung der Oszillatoren so auszulegen ist, daß diese keinen Restphasenfehler aufweisen, der Quadraturfehler bedingte, die sich als Übersprechen der beiden Farbdifferenzsignale auswirkten.

Das letztgenannte Teilproblem wird bei der Erfindung durch den Lösungsgedanken beseitigt, die Frequenz des Mischsignals aus dem zeilenfrequenz-synchronisierten Horizontaloszillator abzuleiten - also nicht aus dem Farb-Burst -, dagegen die Phase des Mischsignals auf den Farb-Burst zu beziehen. Durch diese Maßnahme werden etwa auftretende Phasenfehler vollständig ausgeregelt, so daß keine Quadraturfehler auftreten können.

Die Erfindung wird nun anhand der Figur der Zeichnung näher erläutert, die das Blockschaltbild eines bevorzugten Ausführungsbeispiels der Erfindung darstellt.

Die Figur enthält die vier Umschalter u1, u2, u3, u4, deren eine Stellung R bei Recording und deren andere Stellung P bei Play-back eingenommen wird. Die Umschaltung in die jeweils zutreffende Schalterstellung erfolgt durch die Bedienungsperson des Videobandrecorders in bekannter Weise bei der Wahl von dessen Betriebszustand. In der Figur sind alle Umschalter u.. mit der Schalterstellung für Recording R gezeichnet, und sind im allgemeinen elektronische Mehrfachumschalter mit soviel Schaltebenen, wie parallele Signalpfade durchgeschaltet werden müssen, da es sich bei der Digitalschaltung nach der Erfindung um eine Schaltung zur schnellen Signalverarbeitung handelt und somit die einzelnen Teilschaltungen solche zur parallelen Signalverarbeitung sind. Daher sind auch die Verbindungsleitungen der einzelnen Teilschaltungen in der Figur als Datenbusse mit mehreren Datenleitungen zu verstehen, über die mehrstellige Datenwörter übertragen werden. Lediglich die Eingangsleitung des Analog-Digital-Wandlers aw und die Ausgangsleitung des Digital-Analog-Wandlers dw sind einzelne Leitungen, nämlich solche für Analogsignale.

Dem Analog-Digital-Wandler aw wird über den Umschalter u1 bei Recording R das Farb-Bild-Austast-Synchron-Signal-Gemisch fb, also das FBAS-Signal, sowie das Taktsignal t zugeführt, dessen Frequenz für alle Fernsehstandards gleich ist, vorzugsweise 20,25 MHz beträgt. Am Ausgang des Analog-Digital-Wandlers aw entsteht somit bei Recording das digitale FBAS-Signal fd.

Der Ausgang des Analog-Digital-Wandlers aw liegt am Eingang des ersten Quadraturmischers q1, der in das Basisband mischt und dem die Sinus- und die Cosinuskomponente des Mischsignals vom ersten Oszillator o1 zugeführt sind. Seine in Quadratur zueinander stehenden beiden Ausgangssignale sind dem Eingang des Chromaprozessors cp zugeführt, der in üblicher Weise daraus die beiden Farbdifferenzsignale r, b, also das digitale (R-Y)- und das (B-Y)-Farbdifferenzsignal, separiert, d.h., am Ausgang des Chromaprozessors cp liegen diese beiden Farbdifferenzsignale in demodulierter und digitaler Form vor.

Die beiden Farbdifferenzsignale r, b werden nun einerseits dem zweiten Quadraturmischer q2 zugeführt, dem vom zweiten Oszillator o2 die Sinus- und die Cosinuskomponente seines Mischsignals zugeführt sind. Jeweils ein Ausgang des Quadraturmischers q2 liegt an jeweils einem Eingang des zweiten Addierers a2.

Die Frequenz des ersten Oszillators o1 ist bei Recording R gleich der Standard-Farbträgerfrequenz ft und die des zweiten Oszillators o2 gleich der Colour-under-Frequenz fu. Daher liegt am entsprechenden Eingang des Umschalters u2 das der Farbträgerfrequenz entsprechende Digitalwort "ft".

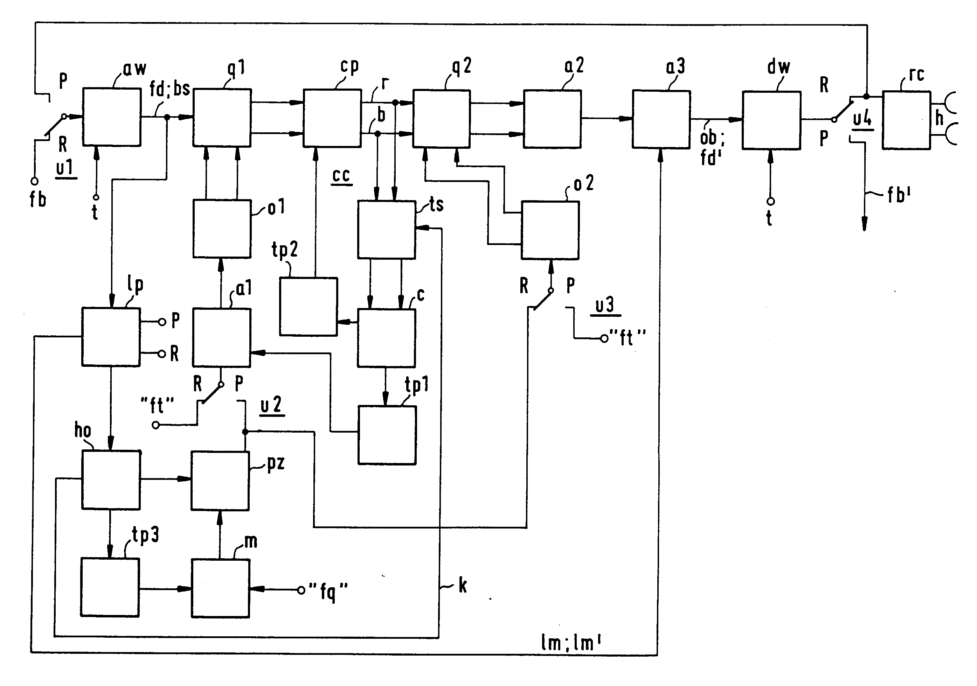

Die beiden Farbdifferenzsignale r, b am Ausgang des Chromaprozessors cp sind auch der während der Dauer der Burst-Key-Impulse k leitend gesteuerten Torschaltung ts zugeführt, von deren Ausgang sie an jeweils einen Eingang der CORDIC-Stufe c gelangen. Bei dieser Stufe handelt es sich um eine Schaltung, die den aus "IRE Transactions on Electronic Computers", 1959, Seiten 330 bis 334 bekannten Algorithmus realisiert, vgl. die dortige Fig. 2, und liefert an ihrem einen Ausgang ein aus den Farbdifferenzsignalen r,b gewonnenes Betragssignal und an seinem anderen Ausgang ein entsprechendes Winkel-, also ein Phasensignal. Das Betragssignal wird mittels des zweiten Tiefpasses tp2 gefiltert und dem Chromaprozessors cp zugeführt; es dient also nach seiner Filterung als Regelgröße der Farbregelschaltung cc, deren die Erzeugung der Regelgröße nicht betreffenden Teile in den Chromaprozessor cp einbezogen sind.

Der Phasenteil der CORDIC-Stufe c stellt den Phasendemodulator für den aus der eingangs genannten Literaturstelle bekannten Phasenregelkreis dar.

Das Phasensignal ist dem ersten Tiefpaß tp1 zugeführt, dessen Ausgang mit dem einen Eingang des ersten Addierers a1 verbunden ist und an dessen anderem Eingang der Ausgang des Umschalters u2 liegt. Somit wird das gefilterte Phasensignal der CORDIC-Stufe zum vom Ausgang des Umschalters u2 dem Addierer a1 zugeführten Digitalwort addiert, und die Summe dieser beiden Signale bestimmt die Frequenz des Oszillators o1.

Das digitale FBAS-Signal fb ist auch dem Lumaprozessor lp zugeführt, der in üblicher Weise bei Recording das Lumasignal lm in ein frequenzmoduliertes Lumasignal $lm'$ umwandelt und bei Play-Back wieder daraus das Lumasignal lm demoduliert. Ferner erzeugt der Lumaprozessor lp wie üblich Signale, die den Horizontaloszillator ho auf die Zeilenfrequenz synchronisieren. Dieser erzeugt die Burst-Key-Impulse k und ein seine Frequenz repräsentierendes Signal, das über den dritten Tiefpaß tp3 dem einen Eingang des Multiplizierers m zugeführt ist. Die Grenzfrequenz des Tiefpasses tp3 ist zur Unterdrückung einer möglichen Rauschbeeinflussung des ersten Oszillators o1 durch den Horizontaloszillator ho ausreichend niedrig zu wählen. Am anderen Eingang des Multiplizierers m liegt das Signal "fq", das das fernsehstandardabhängige Verhältnis Colour-under-Frequenz : Zeilenfrequenz repräsentiert.

Der Ausgang des Multiplizierers m liegt über die Stufe pz zur zeilenweisen, fernsehstandardabhängigen Phasenfortschaltung um 90° bei Recording R über den dritten Umschalter u3 am Frequenzeinstelleingang des zweiten Oszillators o2, dagegen bei Play-back P über den zweiten Umschalter u2 am anderen Eingang des ersten Addierers a1. Der Fortschaltimpuls für die Stufe pz entstammt dem Horizontaloszillator ho und wird von ihm einmal pro Zeile abgegeben.

Der Lumaprozessor lp erzeugt ferner das Lumasignal lm, das dem einen Eingang des dritten Addierers a3 zugeführt ist, dessen anderer Eingang mit dem Ausgang des zweiten Addierers a2 verbunden ist. Am Ausgang des dritten Addieres a3 entsteht somit das aus dem Chromasignal in Colour-under-Frequenzlage und dem Lumasignal $lm'$ kombinierte digitale Signal cw, das im Digital-Analog-Wandler dw, der ebenfalls wie der Analog-Digital-Wandler aw vom Taktsignal t getaktet ist, in das entsprechende analoge Kombinationssignal umgewandelt wird. Vom Ausgang des Digital-Analog-Wandlers dw gelangt es über den vierten Umschalter u4 an die übliche Kopfverstärkerschaltung rc, die die Köpfe h speist.

Bei Play-Back P stehen die vier Umschalter u.. in der mit dem P bezeichneten Schaltstellung. Somit gelangt über die Kopfverstärkerschaltung rc das von den Köpfen h vom Magnetband abgenommene Signal an den Eingang des Analog-Digital-Wandlers aw, an dessen Ausgang das digitale Bandsignal bs auftritt. Der Lumaprozessor lp ist über seinen mit P bezeichneten Eingang wie üblich so bedingt, daß er aus dem digitalen Bandsignal bs wiederum das Lumasignal lm abtrennt.

Über den Umschalter u2 liegt nun der Ausgang der Stufe pz am Eingang des Addieres a1, so daß der Oszillator o1 das die Colour-under-Frequenz bestimmende Frequenzwort zugeführt erhält, das bei Recording R wie oben geschildert, über den Umschalter u3 dem Eingang des Oszillators o2 zugeführt war. Dem Oszillator o2 ist dagegen bei Play-back P das die Farbträgerfrequenz bestimmende Digitalwort "ft" zugeführt.

Somit mischt der Quadraturmischer q1 wiederum ins Basisband, und der Chromaprozessor cp erzeugt aus dessen Ausgangssignalen die Farbdifferenzsignale r, b. Diese werden in der CORDIC-Stufe wie bei Recording R prozessiert, und die Ausgangssignale dieser Stufe im Addierer a1 und dem Chromaprozessor cp weiterverarbeitet.

Der Quadraturmischer q2 mischt nun die Chromasignale r, b auf die Farbträgerfrequenz ft, dessen Ausgangssignale werden im Addierer a2 addiert und im Addierer a3 mit dem Lumasignal lm vereinigt. Dessen Ausgangssignal ist das digitale FBAS-Signal $fd'$, aus dem der Digital-Analog-Wandler dw das dem Fernsehgerät zuzuführende analoge FBAS-Signal $fb'$ bildet.

Die Oszillatoren o1, o2 sind bevorzugt als digitale Akkumulatoren realisiert, die das ihrem zugeführten Digitalwort im Takt des Systemtakts, als z.B. des Taktsignals t, aufsummieren und die nach der nichtvorveröffentlichten EP-A 259 514 (= ITT case S. Mehrgardt et al 24-1) aufgebaut sind.

**Patentansprüche**

1. Für Recording und Play-back gemeinsame Digitalschaltung eines Videobandrecorders, durch die beim Recording (R) aus dem Farb-Bild-Austast-Synchron-Signal-Gemisch (= FBAS-Signal) (fb) durch Analog-Digital-Wandlung ein digitales FBAS-Signal (fd) gebildet, das daraus separierte Chromasignal auf ein Trägersignal (= Color-under-Signal) mit gegenüber der Standard-Farbträgerfrequenz niedrigerer Frequenz umgesetzt und nach Digital-Analog-Wandlung zusammen mit dem frequenzmodulierten Lumasignal (lm′) auf dem Band gespeichert sowie beim Play-back (P) das rücktransformierte Chromasignal wiedergewonnen wird und die folgende Teilschaltungen enthält:

- einen ersten Quadraturmischer (q1), dem das digitale FBAS-Signal (fd) oder das aus dem vom Band abgenommenen Signal nach Analog-Digital-Wandlung gebildete Signal (= Bandsignal) (bs) eingangsseitig zugeführt ist und der in das Basisband mischt,
- einen ersten Oszillator (o1), der die Sinus- und die Cosinuskomponente des Mischsignals des ersten Quadraturmischers (q1) erzeugt,
- einen Chromaprozessor (cp), der aus den beiden Ausgangssignalen des ersten Quadraturmischers (q1) die beiden Farbdifferenzsignale (r, b) separiert und dem eine (automatische) Farbregelschaltung (cc) zugeordnet ist,
- einen dem Chromaprozessor (cp) nachgeschalteten zweiten Quadraturmischer (q2),
- einen zweiten Oszillator (o2), der die Sinus- und die Cosinuskomponente des Mischsignals des zweiten Quadraturmischers (q2) erzeugt, und
- einen Phasenregelkreis mit einem Phasendemodulator, einem ersten Tiefpaß (tp1) und einem ersten Addierer (a1), dessen Ausgang mit dem Frequenzeinstelleingang des ersten Oszillators (o1) verbunden ist, zur Phasenverkopplung des ersten Oszillators (o1) mit dem Standard-Farbträger bzw. dem Colourunder-Signal, wobei
- für Recording (R) die Frequenz des ersten Oszillators (o1) gleich der Standard-Farbträgerfrequenz (ft) und die des zweiten Oszillators (02) gleich der Colourunder-Frequenz (fu), dagegen für Playback (P) die Frequenz des ersten Oszillators (o1) gleich der Colour-under-Frequenz (fu) und die des zweiten Oszillators (o2) gleich der Standard-Farbträgerfrequenz (ft) ist und
- der Videobandrecorder ferner einen zeilenfrequenz-synchronisierten Horizontaloszillator (ho) enthält, der unter anderem Burst-Key-Impulse (k) erzeugt, gekennzeichnet durch folgende Merkmale:

- über eine während der Dauer der Burst-Key-Impulse (k) leitend gesteuerte Torschaltung (ts) sind die beiden Farbdifferenzsignale (r, b) einer CORDIC-Stufe (c) zugeführt (zur Umwandlung in entsprechende Betrags- und Phasensignale),
- deren Betragsignal dient nach Filterung mittels eines zweiten Tiefpasses (tp2) als Regelgröße der Farbregelschaltung (cc) und deren Phasenteil ist der Phasendemodulator,
- dem einen Eingang eines Multiplizierers (m) ist über einen dritten Tiefpaß (tp3), dessen Grenzfrequenz zur Unterdrückung einer Rauschbeeinflussung des ersten Oszillators (o1) durch den Horizontaloszillator (ho) ausreichend niedrig ist, ein die Frequenz des Horizontaloszillators (ho) repräsentierendes Signal und dem anderen Eingang ein das fernsehstandard-abhängige Verhältnis Colour-under-Frequenz:Zeilenfrequenz repräsentierendes Signal ("fq") zugeführt, und
- der Ausgang der Multiplizierers (m) liegt über eine Stufe (pz) zur zeilenweisen, fernsehstandard-abhängigen Phasenfortschaltung um 90° bei Recording (R) am Frequenzeinstelleingang des zweiten Oszillators (o2), dagegen bei Play-back (P) am anderen Eingang des ersten Addierers (a1).

## Claims

1. A digital circuit of a video tape recorder common to both the recording and the playback operation, by which during the recording operation (R), by way of an analog-to-digital conversion, a digital composite color (video) signal (fd) is formed from the composite color (video) signal (fb), and the chroma signal as separated therefrom is converted into a subcarrier (= color-under) signal whose frequency is lower compared to the standard color or chrominance subcarrier frequency and, following the digital-to-analog conversion, is stored on the tape together with the frequency-modulated luma signal (1m'), and by which during the playback operation (P) there is restored the reconverted chroma signal, and which is composed of the following partial circuits:

- a first quadrature mixer (q1) to the input of which there is applied either the digital composite color (video) signal (fd) or else the signal (= tape signal)( bs ) which is formed after an analog-to-digital conversion from the signal as taken off the tape, with said mixer mixing into the baseband,

- a first oscillator (o1) which generates both the sine and the cosine components of the mixing signal of said first quadrature mixer (q1),
- a chroma processor (cp) which separates from the two output signals of said first quadrature mixer (q1) the two color difference signals ( r, b), and to which there is assigned an (automatic) color control circuit (cc),
- a second quadrature mixer (q2) which is arranged subsequently to said chroma processor (cp),
- a second oscillator (o2) which generates both the sine and the cosine components of the mixing signal of said second quadrature mixer (q2), and
- a phase control circuit including a phase demodulator, a first low-pass filter (tp1 ) and a first adder stage (a1), with the output thereof being connected to the frequency-setting input of said first oscillator (o1) for effecting the phase coupling of said first oscillator (o1) to the standard color subcarrier or the color-under signal respectively, in which,
- for the recording operation (R),the frequency of said first oscillator (o1) is the same as the standard color subcarrier frequency (ft) and that of said second oscillator (o2) is the same as the color-under frequency (fu) whereas, for the playback operation (P), the frequency of said first oscillator (o1) equals the said color-under frequency (fu) and that of said second oscillator (o2) equals the standard color subcarrier frequency (ft), and
- the video tape recorder, moreover, contains a line-frequency-synchronized horizontal sweep generator (ho) which, among others, generates burst-key pulses (k),

  characterized by the following features:
- via a gating circuit (ts) which is rendered conductive during the period of said burst-key pulses (k), the two color difference signals (r, b) are fed to a CORDIC stage (c) (for conversion into a corresponding quantity signal and a corresponding phase signal),
- the quantity signal thereof, after having been filtered by means of a second low-pass filter (tp2), serves as an output quantity of said color control circuit (cc), and with the phase portion thereof being the phase demodulator,

- to the one input of a multiplier (m) and via a third low-pass filter (tp3) whose critical frequency, for the purpose of suppressing any possible noise influence of said first oscillator (o1) by said horizontal sweep generator (ho), is at a sufficiently low level, there is fed a signal representing the frequency of said horizontal sweep generator (ho), while to the other input thereof there is fed a signal ("fq") representing the television-standard-dependent ratio of said color-under frequency to said line frequency, and
- via a stage (pz) which serves the linewise, television-standard-dependent 90-degree phase stepping during the recording operation (R), the output of said multiplier (m) is connected to the frequency-setting input of said second oscillator (o2) and, during the playback operation (p), to the other input of said first adder stage (a1).

## Revendications

1. Circuit numérique d'un magnétoscope commun pour l'enregistrement et la reproduction, grâce auquel, en cas d'enregistrement (R), on crée, à partir du signal composite (fb) de synchronisation de balayage d'image couleur (FBAS), un signal numérique (fd) (FBAS), le signal de chrominance qui en est séparé est converti par conversion analogique-numérique en un signal porteur (signal "colour under frequency") à une fréquence plus basse que la fréquence porteuse de chrominance standard et, après conversion numérique-analogique, enregistré sur la bande en même temps que le signal de luminance (1m') modulé en fréquence, et, en cas de reproduction (P), le signal de chrominance converti en sens inverse est récupéré, et qui comprend les éléments de circuits suivants :

   - un premier mélangeur en quadrature (qi) qui reçoit du côté de l'entrée le signal numérique FBAS (fd) ou le signal formé après conversion analogique-numérique par le signal prélevé sur la bande ( = signal de bande, bs) et qui mélange dans la bande de base,
   - un premier oscillateur (o1), qui produit les composantes sinus et cosinus du signal mélangé du premier mélangeur en quadrature (q1),

- un processeur de chrominance (cp) qui, à partir des deux signaux de sortie du premier mélangeur en quadrature (q1) sépare les deux signaux différentiels de chrominance (r, b) et auquel est adjoint un circuit de réglage (automatique) de la couleur,
- un deuxième mélangeur en quadrature (q2) branché en aval du processeur de chrominance (cp),
- un deuxième oscillateur (o2) qui produit les composantes sinus et cosinus du signal mélangé du deuxième mélangeur en quadrature (q2),
- un circuit de réglage de phase comportant un modulateur de phase, un premier filtre passe-bas (tp1) et un premier additionneur (a1) dont la sortie est reliée à l'entrée de réglage en fréquence du premier oscillateur (o1), afin de coupler en phase le premier oscillateur (o1) avec la porteuse standard de chrominance ou le signal "colour under frequency", dans lequel
- pour l'enregistrement (R), la fréquence du premier oscillateur (o1) est égale à la fréquence de la porteuse standard de chrominance (ft) et celle du deuxième oscillateur (o2) est égale à celle du signal "colour under frequency" (fu), pour la reproduction (P), au contraire, la fréquence du premier oscillateur (o1) est égale à celle du signal "couleur sous fréquence" (fu) et celle du deuxième oscillateur (o2) est égale à la fréquence de la porteuse standard de chrominance (ft), et
- le magnétoscope comporte encore un oscillateur horizontal synchronisé sur la fréquence de lignes (ho), qui émet entre autres des impulsions brèves (k), caractérisé par les caractéristiques suivantes :
- par l'intermédiaire d'un circuit de porte (ts) commandé pendant la durée des impulsions de synchronisation (k), les deux signaux différentiels de chrominance (r, b) sont envoyés à un étage CORDIC (c) (pour conversion en signaux correspondants d'amplitude et de Phase),
- dont le signal d'amplitude sert, après filtrage au moyen d'un deuxième filtre passe-bas (tp2), de valeur de réglage du circuit de réglage de chrominance (cc) et dont la partie de phase est le modulateur de phase,

- à une entrée d'un multiplicateur (m) est envoyé, par l'intermédiaire d'un troisième filtre passe-bas (tp3) dont la fréquence de coupure est suffisamment basse pour éliminer l'influence du bruit de fond du premier oscillateur (o1) par l'oscillateur horizontal (ho), un signal représentant la fréquence de l'oscillateur horizontal (ho), et à l'autre entrée, un signal ("fq") représentant la relation, dépendant de la norme de télévision, entre le signal "colour under frequency" et la fréquence de lignes, et
- la sortie du multiplicateur (m) est reliée par l'intermédiaire d'un étage (pz) pour le décalage de phase à 90° par lignes, dépendant de la norme de télévision, en cas d'enregistrement (R), à l'entrée de réglage en fréquence du deuxième oscillateur (o2), au contraire, en cas de reproduction (P), à l'autre entrée du premier additionneur (a1).